Europäisches Patentamt

European Patent Office

Office européen des brevets

(19)

Veröffentlichungsnummer: **0 276 634**

**A1**

(12) **EUROPÄISCHE PATENTANMELDUNG**

(21) Anmeldenummer: **87810778.8**

(51) Int. Cl.4 **B23K 26/00**

(22) Anmeldetag: **23.12.87**

(30) Priorität: **16.01.87 CH 139/87**

(43) Veröffentlichungstag der Anmeldung:
**03.08.88 Patentblatt 88/31**

(84) Benannte Vertragsstaaten:
**AT BE CH DE ES FR GB IT LI NL SE**

(71) Anmelder: **Bystronic Laser AG**
**Industriestrasse**
**CH-3362 Niederönz(CH)**

(72) Erfinder: **Zumstein, Ernst**
**Chosthusweg 11**
**CH-3422 Kirchberg(CH)**

(74) Vertreter: **Steiner, Martin et al**
**c/o AMMANN PATENTANWAELTE AG BERN**
**Schwarztorstrasse 31**
**CH-3001 Bern(CH)**

(54) **Verfahren und Anlage zur Herstellung von Werkstücken.**

(57) Zum Ausschneiden von Werkstücken aus einer Blechtafel wird die Blechtafel zuerst einer Stanz- und/oder Nibbelmaschine (1) zugeführt, in welcher Stanz-und Nibbeloperationen ausgeführt werden. Die so vorbearbeitete Blechtafel wird dann mittels Transport-und Puffervorrichtungen (4,5) einer Laserstrahl-Schneidmaschine (2) zugeführt, in welcher längere, umständliche Konturen ausgeschnitten und die Werkstücke aus der Blechtafel freigeschnitten werden. Bei allen Schneidvorgängen mittels des Laserstrahls bleibt die Blechtafel stationär, sodass keine Probleme mit der Handhabung der freigeschnittenen Werkstücke und dem Restgitter entstehen. Die beiden vorhandenen Maschinen (1,2) können unabhängig voneinander für Spezialarbeiten oder gemeinsam zur aufeinanderfolgenden Bearbeitung derselben Blechtafeln verwendet werden, wobei Puffer (4,5) der Zwischenlagerung von Blechtafeln dienen, wenn beispielsweise der Arbeitstakt der Stanz-und Nibbelmaschine (1) höher ist als der Arbeitstakt der Laserstrahl-Schneidmaschine (2). Es ist damit eine unabhängige, optimale Nutzung der verfügbaren Maschinenkapazitäten möglich.

FIG.1

## Verfahren und Anlage zur Herstellung von Werkstücken

Die vorliegende Erfindung betrifft ein Verfahren und eine Anlage zur Herstellung von Werkstücken aus einem Rohling, insbesondere einer Blechtafel. teils durch Stanzen oder Nibbeln, teils durch thermisches Schneiden, insbesondere Laserstrahl-Schneiden. Derartige Verfahren und Anlagen sind bekannt, wobei die beiden Stationen in einer Maschine vereinigt sind und auf ein-und denselben Rohling, beispielsweise eine Blechtafel, einwirken. Der erhebliche Vorteil solcher kombinierter Anlage besteht darin, dass mittels der in der Stanz-oder Nibbelstation verfügbaren Werkzeuge kleinere Oeffnungen mit einfachen Konturen schnell und sauber ausgeschnitten werden können, während mit dem vorhandenen Laserstrahl längere und kompliziertere Konturen geschnitten werden können, für welche Werkzeuge zu teuer wären oder die verfügbaren Stanzkräfte nicht ausreichen würden. Solche Konturen können zwar mittels Nibbelwerkzeugen bearbeitet werden, doch ist dieses Vorgehen recht zeitraubend und führt zu unsauberen Schnittflächen. Die bekannten kombinierten Anlagen sind jedoch mit verschiedenen Nachteilen behaftet. Die Programmierung beim Ausschneiden vieler Teile aus einer Blechtafel ist aufwendig und kann nicht oder nur mit grossem Aufwand mittels Computer erfolgen. In der Maschine sind der Werkzeugrevolver und der Laser-Schneidkopf ortsfest angeordnet, während die Blechtafel, die mittels Haltepratzen am Rand gehalten ist, während der Bearbeitung bewegt wird.

Diese Haltepratzen behindern die freie Aufteilung der verfügbaren Tafelfläche für die zu erstellenden Teile. Bei grossen Teilen muss die Maschine angehalten und der Teil entfernt werden. Gegen Ende der verschiedenen Schneidvorgänge verbleibt nur ein schwaches Restgitter, was die genaue, korrekte Bewegung während der restlichen Schneidvorgänge in Frage stellt und die Entfernung des Restgitters und der Teile erschwert. Der Hauptnachteil dürfte jedoch darin bestehen, dass stets nur eine Bearbeitungsstation gleichzeitig in Betrieb sein kann, was ein rationelles Arbeiten und eine optimale Nutzung der verfügbaren Schnittkapazität verunmöglicht.

Ziel vorliegender Erfindung ist es, die oben erwähnten Nachteile zu beseitigen, und eine besonders rationelle Bearbeitung zu ermöglichen. Dieses Ziel wird gemäss Kennzeichen des Anspruchs 1 bzw. gemäss Kennzeichen des Anspruchs 7 erreicht. Da somit die beiden Stationen unabhängig voneinander nach individuellem Programm arbeiten. können sie gleichzeitig in Betrieb stehen und somit optimal genutzt werden. Insbesondere können hierbei vorerst die Stanz-oder Nibbelarbeiten ausgeführt werden, während welcher die Blechtafel noch verhältnismässig wenig geschwächt wird und daher problemlos bewegt werden kann, worauf die Schneidarbeit bei auf ihrer Unterlage feststehender Blechtafel erfolgen kann, so dass die Stabilität des Restgitters und die Entfernung schon freigeschnittener Werkstücke keine Probleme bieten. Es kann nach Beendigung aller Arbeiten auf einfachste Weise das ganze Restgitter mitsamt den freigeschnittenen Werkstücken entfernt werden.

Es ist in jedem Falle eine ideale Programmierung möglich, unabhängig davon, ob grosse oder kleine Stückzahlen zu produzieren sind. Die beiden Stationen können völlig unabhängig voneinander genutzt werden, indem beliebige Werkstücke nur durch Stanzen oder Nibbeln, nur durch Laserschneiden oder aber durch kombinierte Bearbeitung im oben erwähnten Sinne produziert werden können. Es ist dann auch möglich, freie Kapazitäten zu nutzen, welche entstehen. wenn die Bearbeitungszeiten oder Taktzeiten für bestimmte Werkstücke in den beiden Stationen verschieden sind. Dann werden die Rohlinge in Puffern zwischengelagert, damit die beiden Stationen auch hinsichtlich ihrer Taktzeiten unabhängig werden.

Die Erfindung wird nun anhand von Ausführungsbeispielen näher erläutert.

Die Fig. 1 und 2 zeigen schematisch je ein Ausführungsbeispiel einer erfindungsgemässen Bearbeitungsanlage,

Fig. 3 zeigt eine Anordnung fertiger Werkstücke, wie sie aus einer Blechtafel ausgeschnitten werden,

Fig. 4 zeigt die Blechtafel nach dem ersten Bearbeitungsschritt in der Stanz-und Nibbelstation,

Fig. 5 zeigt die mittels Laserstrahl auszuschneidenden Konturen der Werkstücke, und

Fig. 6 zeigt schematisch die Vorgänge bzw. Anlageteile zur Vorbereitung und Durchführung einer Bearbeitung.

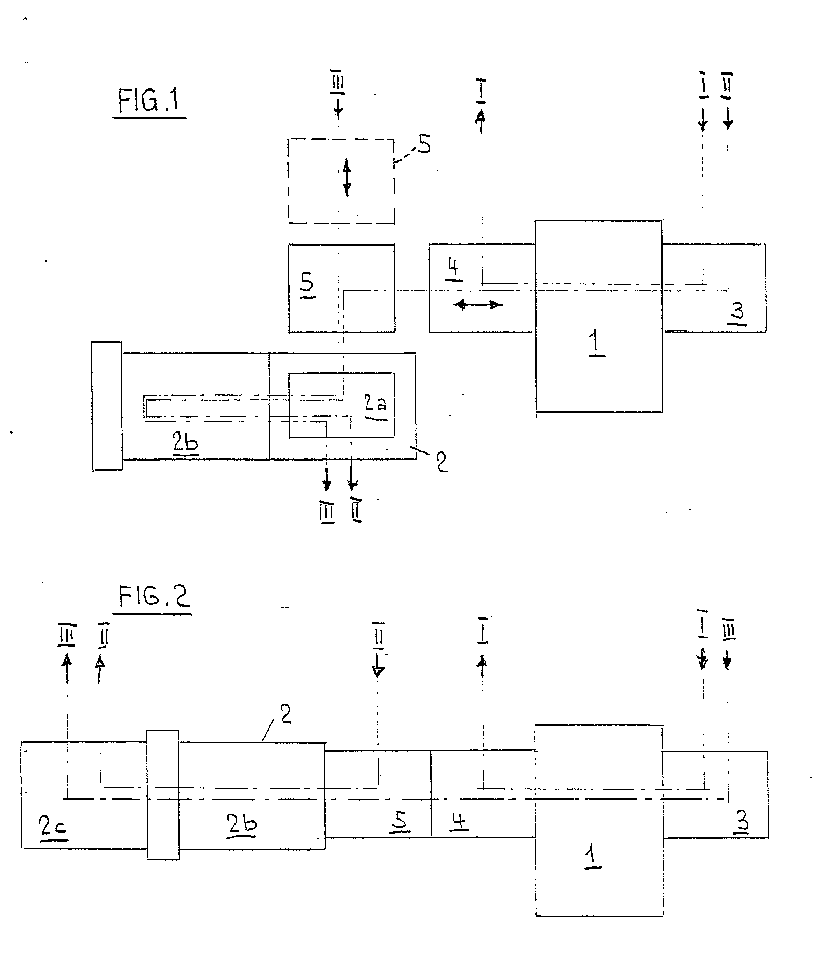

Fig. 1 zeigt schematisch eine Bearbeitungsanlage mit einer Stanz-und Nibbelmaschine 1 und mit einer Laserstrahl-Schneidmaschine 2. Die Stanz-und Nibbelmaschine 1 ist mit einem Werkzeugrevolver versehen. der mit auswechselbaren Werkzeugen, insbesondere Stanzstempeln und Stanzmatrizen versehen ist, und die wahlweise in eine Bearbeitungsposition geschwenkt und zum Ausstanzen insbesondere von Löchern betätigt werden können.

Der zu bearbeitende Rohling. insbesondere eine Blechtafel, ist an einem Rand mittels Haltepratzen gehalten und wird für jede einzelne Bearbeitung in die programmierte Bearbeitungsposition gebracht. Typische Stanzarbeiten, ggf. auch geeignete Nibbelarbeiten, können mit dieser Maschine rationell, sauber und genau ausgeführt werden.

Die Laserstrahl-Schneidmaschine 2 weist einen Beschikkungplatz 2a und einen Bearbeitungsplatz 2b auf, und sie ist mit einer automatischen Wechselvorrichtung ausgestattet, welche fertig bearbeitete Werkstücke und Abfälle rasch von der Bearbeitungsstelle abzuführen und einen neuen zu bearbeitenden Rohling, beispielsweise eine Blechtafel, in die Bearbeitungsstellung zu bringen gestattet. In der Bearbeitungsstellung bleibt der Rohling, beispielsweise die Blechtafel, stationär auf dem Maschinentisch, während der Laserstrahl über bewegte Spiegel gemäss Programm längs der zu - schneidenden Konturen bewegt wird.

Der Stanz-und/oder Nibbelmaschine 1 ist eine Beschikkungsstelle 3 zugeordnet, über welche Blechtafeln zugeführt werden können. Beiden Maschinen oder Stationen ist eine Uebernahme-und Beschickungsvorrichtung 4 zugeordnet, welche dazu bestimmt ist, bearbeitete Blechtafeln aus der Station 1 zu übernehmen und der Station 2 zuzuführen. Durch Doppelpfeil in Fig. 1 ist angedeutet, dass die Uebernahme-und Beschickungsvorrichtung 4 hin-und herbewegt werden kann, so dass sie einerseits Uebernahmefunktion für die Station 1 und Beschickungsfunktion für die Station 2 übernehmen kann. Sie kann also an die Stelle einer zweiten Beschickungsvorrichtung 5 verschoben werden, wenn dieselbe in eine in Fig. 1 oben dargestellte, unwirksame Stellung verschoben ist. Durch Doppelpfeil ist auch diese Verschiebungsmöglichkeit der Beschickungsvorrichtung 5 angedeutet. Beide Vorrichtungen 4 und 5 können als reine Transportvorrichtungen oder aber als Puffer oder Zwischenmagazine für mehrere Rohlinge ausgebildet sein.

In Fig. 1 sind nun durch strich-punktierte Linien I bis III verschiedene mit dieser Anlage mögliche Bearbeitungstypen dargestellt. Die Linie I deutet an, dass bestimmte Werkstücke, an welchen nur Stanz-und oder Nibbelarbeiten auszuführen sind, über die Beschickungsvor richtung 3 der Stanz-und Nibbelmaschine 1 zugeführt, dort bearbeitet und dann über die Vorrichtung 4 wegtransportiert werden können. Die Linie III deutet an, dass Rohlinge direkt der Laserstrahl-Schneidmaschine 2 zugeführt werden können, welche nur eine Bearbeitung durch Laserstrahl-Schneiden benötigen. Die Linie II deutet an, dass Blechtafeln zuerst der Stanz-und Nibbelmaschine 1 zugeführt, dort bearbeitet, auf die Vorrichtung 4 gefördert, mittels derselben zur Maschine 2 transferiert und derselben zur Bearbeitung zugeführt und nach erfolgter Bearbeitung abgeführt werden. Es stehen somit, wie bereits oben erwähnt, alle Möglichkeiten der rationellen Nutzung der vorhandenen Maschinenkapazität zur Verfügung, d. h. Werkstücke können nacheinander in beiden Stationen 1 und 2 bearbeitet werden, aber es können auch unbearbeitete oder teils bearbeitete Rohlinge nur in der einen oder anderen bearbeitet werden. Sind die Vorrichtungen 4 und 5 als Puffer oder Zwischenmagazine ausgebildet, so können dort zur Bearbeitung bestimmte Blechtafeln gespeichert werden. Ist beispielsweise die Bearbeitungszeit eines bestimmten Rohlings in der Station 1 kürzer als die Bearbeitungszeit desselben Rohlings in der Station 2, so können die Werkstücke in der Station 1 in der für diese Station optimalen Taktzeit bearbeitet und dann gespeichert werden, um nachträglich in der Station 2 in langsamerem Takt fertigbearbeitet zu werden. Ist hierbei die Bearbeitung einer bestimmten Serie in der Station 1 beendet, steht diese Station für die Bearbeitung anderer Rohlinge zur Verfügung, welche beispielsweise nur eine Bearbeitung in der Station 1 benötigen. Entsprechend können freie Kapazitäten der Station 2 für bestimmte Bearbeitungen benützt werden, wenn die Station 1 anderweitig ausgelastet ist oder Rohlinge bearbeitet, welche nachträglich in der Station 2 wesentlich schneller bearbeitet werden können.

In diesem Sinne sind dank der völligen Unabhängigkeit der beiden Stationen optimale Voraussetzungen für eine rationelle Nutzung der verfügbaren Maschinenkapazität bzw. die möglichst rationelle Herstellung von Werkstükken möglich.

Fig. 2 zeigt eine ähnlich aufgebaute Anlage, wobei in Fig. 2 entsprechende Teile gleich bezeichnet sind wie in Fig. 1. Die Vorrichtungen 4 und 5 sind in diesem Falle nicht beweglich, sondern fest angeordnet, und es sind nicht dargestellte Mittel für den Transport der Rohlinge zwischen diesen auf Puffer ausgebildeten Anlageteilen vorhanden. Die Laserstrahl-Schneidmaschine 2 ist etwas anders ausgebildet, indem die Bearbeitungsstelle 2b rechts und eine Entnahmestelle 2c links angeordnet ist. Durch strich-punktierte Linien I bis III ist wiederum angedeutet, dass Blechtafeln nach Belieben entweder durch die eine oder die andere Station 1 oder 2 geführt werden können, um Spezialarbeiten auszuführen, oder aber dass Blechtafeln nacheinander durch die Stanz-und Nibbelmaschine 1, durch die Puffer 4 und 5 und durch die Laserstrahl-Schneidmaschine 2 geführt werden können, um beliebige Kombinationen von Bearbeitungen vorzunehmen. Die übrigen Funktionen und Möglichkeiten entsprechen den oben anhand der Fig. 1 beschriebenen.

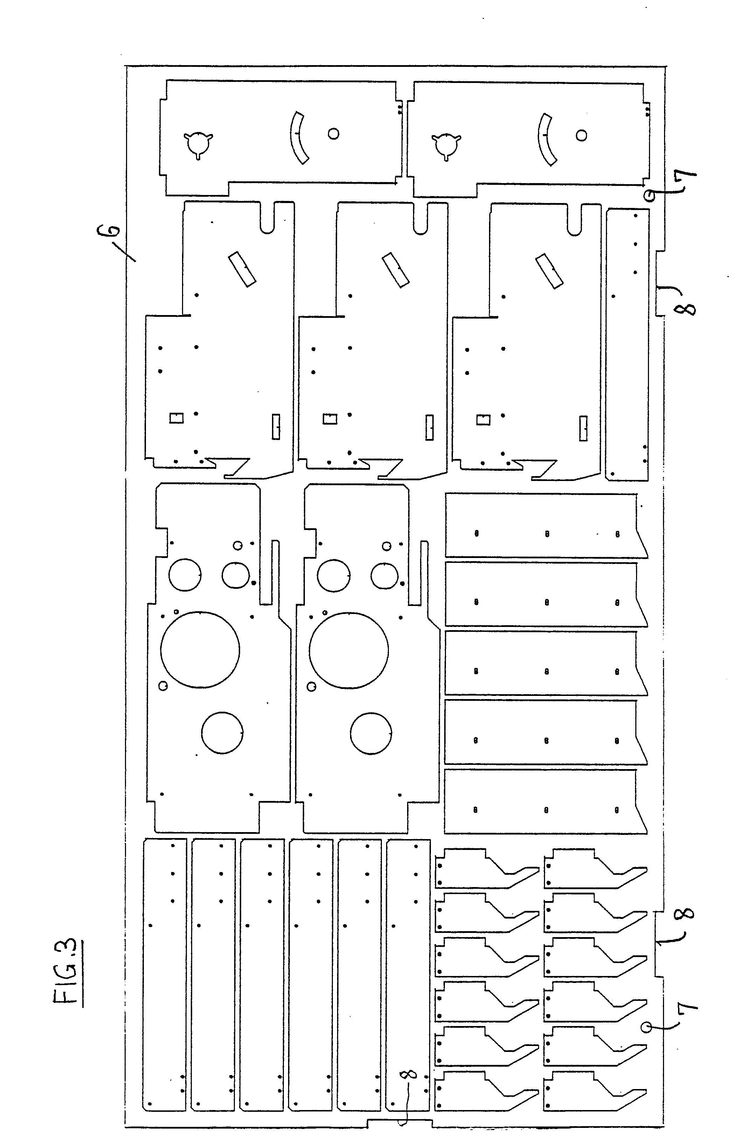

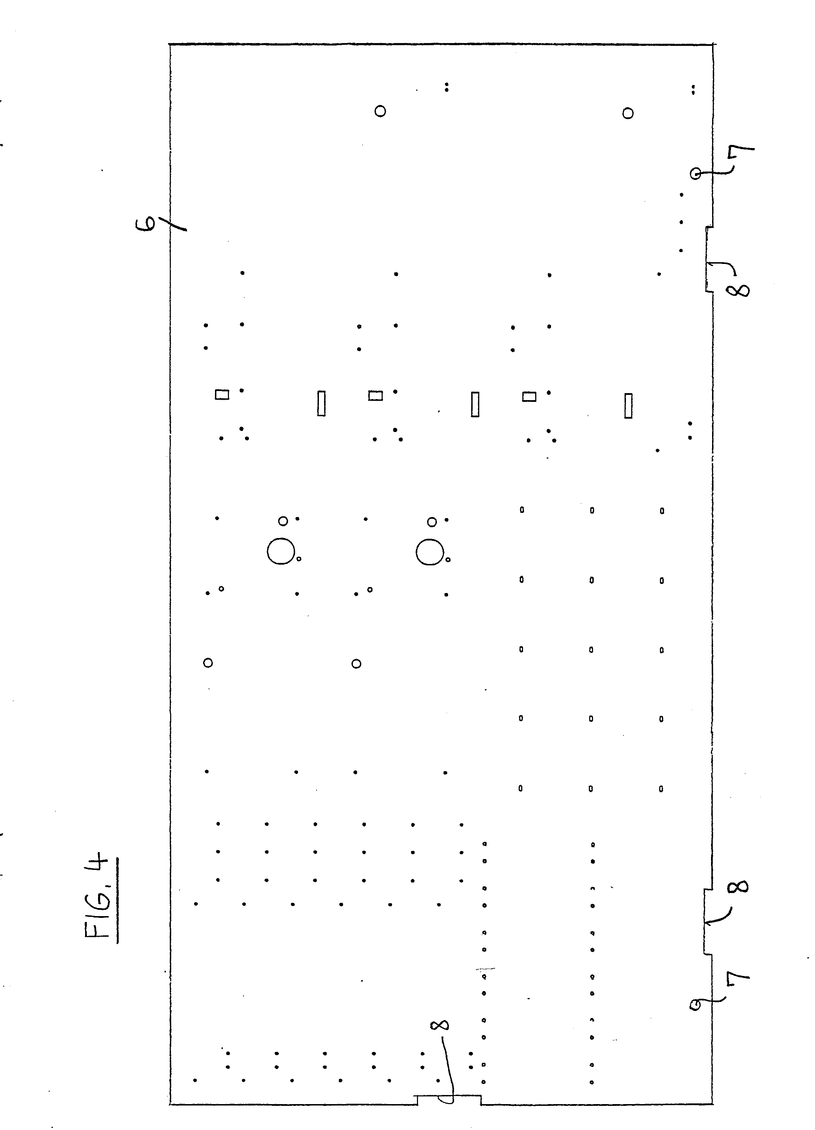

Die Fig. 3 bis 5 zeigen ein Bearbeitungsbeispiel. In Fig. 3 ist eine Blechtafel 6 gezeigt, auf welcher die ebenfalls dargestellten einzelnen Werkstücke mit verschiedenen Löchern herausgearbeitet werden sollen. Die rohe, unbearbeitete Blechtafel 6 wird wie beschrieben zuerst der Station 1, also der Stanz-und Nibbelmaschine zugeführt. Fig. 4 zeigt, welche Bearbeitungen in dieser Station vorgenommen werden, nämlich im wesentlichen das Ausstanzen kleinerer Löcher mit einfachen runden und rechteckigen Konturen. Für solche Bearbeitungen stehen normierte Stanzwerkzeuge und auch die erforderlichen Bearbeitungskräfte zur Verfügung. In der Station 1 wer den auch beispielsweise 2 Referenzlöcher 7 am unteren Rand der Blechtafel ausgestanzt, und zwar natürlich an Stellen, die nicht von Werkstücken eingenommen werden. Anstelle von Referenzlöchern können aber auch Kantenstreifen weggestanzt werden, womit präzise Anschlagkanten 8 entstehen. Diese Orientierungslöcher 7 oder Anschlagkanten 8 dienen dazu, die Blechtafel bei der späteren Bearbeitung in der Station 2 zu orientieren.

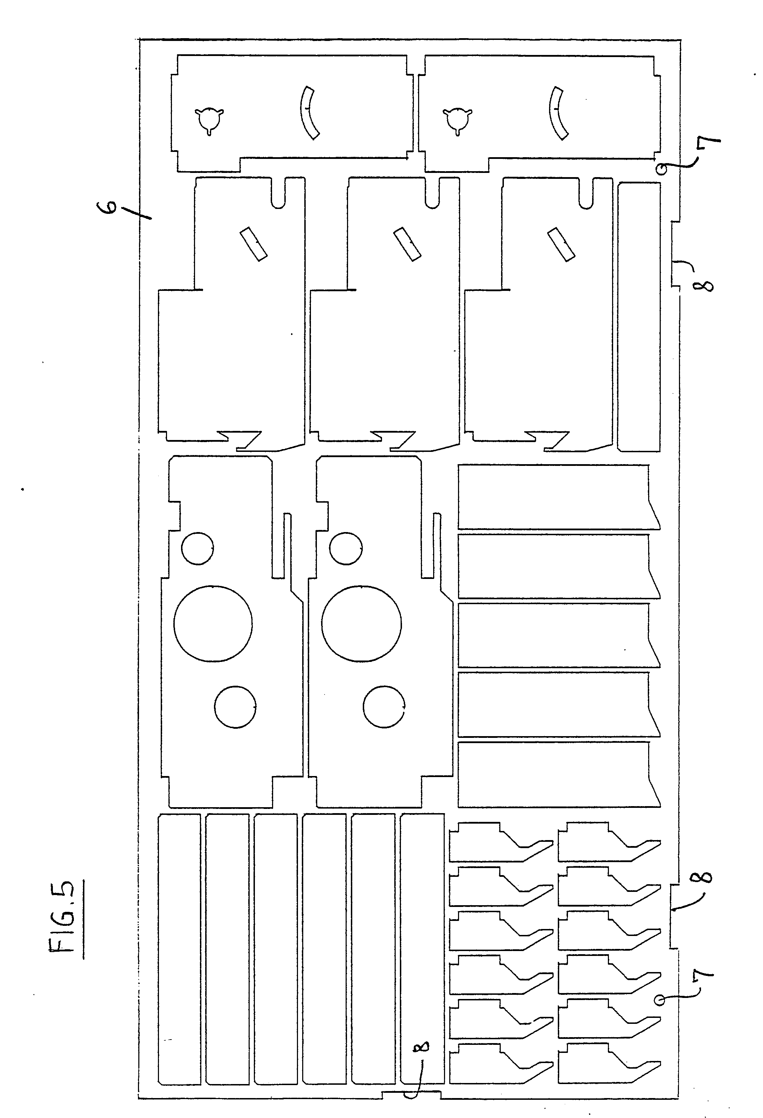

Fig. 5 zeigt die in der Station 2 vorzunehmenden Bearbeitungen. Es werden insbesondere die Aussenkonturen der einzelnen Werkstücke, aber auch grössere Löcher oder Löcher mit komplizierten Formen mit dem Laserstrahl ausgeschnitten. Anhand der Orientierungslöcher 7 oder der Anschlagkanten 8 wird die Blechtafel in der Station 2 mittels konischer Orientierungsstifte bzw. Anschlägen genau orientiert und während der ganzen Bearbeitung in der gleichen Orientierung gehalten. Bewegt wird der Laserstrahl mittels beweglicher Spiegel, um die in Fig. 5 dargestellten Konturen zu schneiden. Da also weder die Blechtafel noch die einzelnen freigeschnittenen Werkstücke in der Station 2 bewegt werden, können keine Probleme auftreten, selbst wenn die verbleibenden Materialstreifen zwischen benachbarten ausgeschnittenen Werkstücken sehr dünn ausfallen. Die ausgeschnittenen Werkstücke und das Restgitter können nach erfolgter Bearbeitung problemlos aus der Laserstrahl-Schneidmaschine entfernt werden.

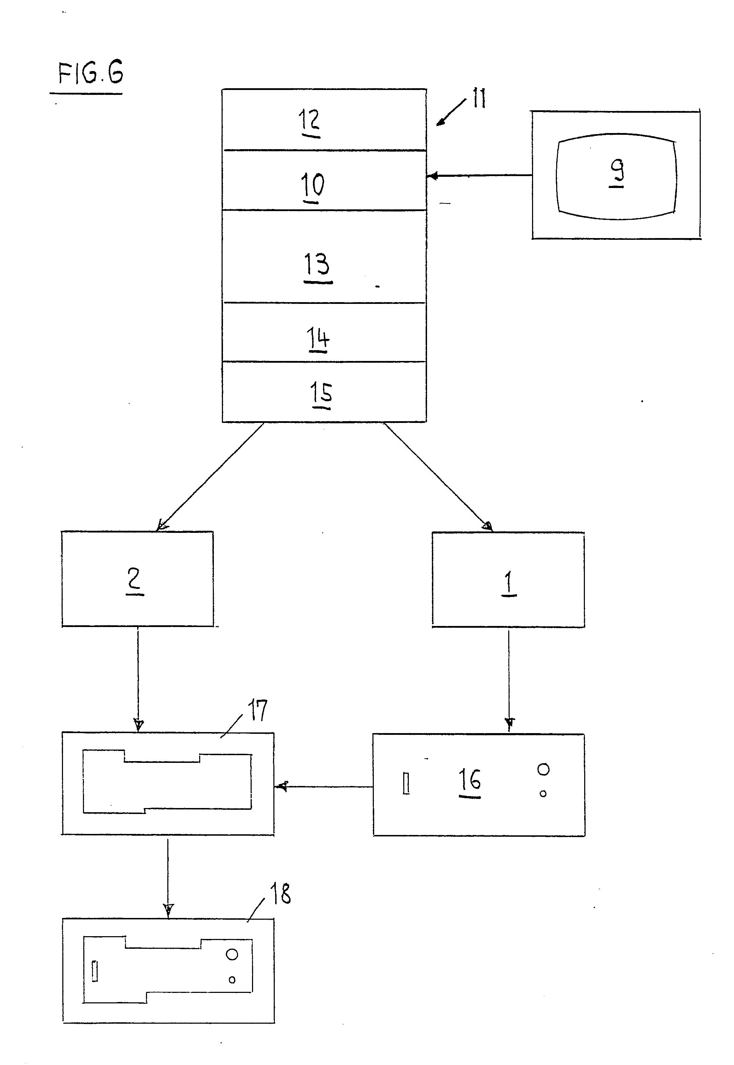

Die Fig. 3 bis 5 zeigen die optimale Anordnung der Werkstücke auf der Blechtafel, bzw. die optimale Ausnutzung der Blechtafel. Diese Einteilung und Aufteilung erfolgt vollautomatisch mittels Computer, welchem die geometrischen Daten der Werkstücke sowie eine Auftragsliste, d.h. die Anzahl der zu erstellenden Werkstücke jeder Form, eingegeben wird. Diese Vorgänge sind in Fig. 6 - schematisch dargestellt. Mittels eines Lesers 9 werden die geometrischen Daten der einzelnen Werkstücke erfasst und im Speicher 10 des Computers 11 gespeichert, dessen Zentraleinheit mit 12 bezeichnet ist. Einem weiteren Speicher 13 des Computers wird die Auftragsliste, d.h. die Stückzahlen der einzelnen Werkstücke, eingegeben. Wie in Fig. 6 angedeutet, erfolgt nun eine Optimierung 14 der Werkstückanordnung und der Bearbeitungsoperationen, worauf ein Schneidplan 15 erstellt wird, mittels welchem sowohl die Stanz- und Nibbelmaschine 1 als auch die Laserstrahl-Schneidmaschine 2 gesteuert werden. In der Station 1 entstehen dann die einfachen Löcher, was an der Stelle 16 angedeutet ist, und in der Station 2 werden Konturen und kompliziert geformte Löcher geschnitten, wie an der Stelle 17 angedeutet. Daraus resultieren die fertigen Teile wie bei 18 angedeutet.

Es sind verschiedene Ausführungsvarianten möglich. Während bisher angenommen wurde, eine Bearbeitunsanlage weise je eine Stanz-und Nibbelpresse und eine Laserstrahl-Schneidmaschine auf, wäre es beispielsweise auch möglich, in die Anlage zwei Laserstrahl-Schneidmaschinen zu integrieren, wenn für eine bestimmte Anwendung bzw. für einen bestimmten Betrieb davon auszugehen ist, dass erheblich mehr Schneidarbeiten als Stanzarbeiten auszuführen sind. Der Materialtransport bzw. die Materiallagerung zwischen den einzelnen Stationen wäre dann entsprechend zu organisieren. Anstelle einer Laserstrahl-Schneidmaschine könnte ggf. auch eine Maschine für eine andere Art thermischen Schneidens oder zusätzlich eine solche andere Maschine vorgesehen sein.

Bisher wurde davon ausgegangen, dass der Rohling in der Schneidstation stillsteht und das Schneideorgan bewegt wird. Entscheidend ist jedoch, dass der Rohling in der Schneidstation auf seiner Unterlage nicht bewegt wird. Es wäre also möglich, den Rohling in der Schneidstation in gleichbleibender Lage auf einem Koordinatentisch an zuordnen, der zum Schneiden der Konturen gesteuert wird, während das Schneidorgan, z.B. der Laser-Schneidkopf ortsfest angeordnet ist.

## Ansprüche

1. Verfahren zur Herstellung von Werkstücken aus einem Rohling, insbesondere einer Blechtafel, teils durch Stanzen oder Nibbeln, teils durch thermisches Schneiden, insbesondere Laserstrahlschneiden, dadurch gekennzeichnet, dass man in einer unabhängigen Stanz-und oder Nibbelstation (1) bearbeitet, wobei der Rohling (6) bei mehreren Schnitten bewegt wird, und dass unabhängig davon in einer Schneidstation (2) an dem in gleichbleibender Lage auf eine Unterlage befindlichen Rohling (6) mit einem thermischen Schneidorgan, insbesondere Laser-Schneidkopf, Konturen geschnitten werden.

2. Verfahren nach Anspruch 1, dadurch gekennzeichnet, dass die Konturen bei feststehendem Rohling und bewegtem Schneidorgan geschnitten werden.

3. Verfahren nach Anspruch 1 oder 2, dadurch gekennzeichnet, dass der Rohling zuerst in der Stanz-und/oder Nibbelstation (1) und nachträglich in der Schneidstation (2) bearbeitet wird.

4. Verfahren nach einem der Ansprüche 1 bis 3, dadurch gekennzeichnet, dass man in den beiden Stationen (1,2) unabhängig voneinander in dem durch die jeweilige Bearbeitung bedingten Takt bearbeitet, und dass teilweise bearbeitete Rohlinge (6) in mindestens einem Puffer (4,5) zwischengelagert werden.

5. Verfahren nach Anspruch 4, dadurch gekennzeichnet, dass freie Kapazitäten jeder Station (1,2) zur Bearbeitung von Rohlingen (6) genutzt werden, die in der anderen Station (2 bzw. 1) nicht oder in kürzerem Takt zu bearbeiten sind.

6. Verfahren nach einem der Ansprüche 1 bis 5, dadurch gekennzeichnet, dass der Rohling (6) mit Orientierungselementen, z.B. Löchern (7) oder Kanten (8) versehen wird.

7. Verfahren nach einem der Ansprüche 1 bis 6, dadurch gekennzeichnet, dass die Anordnung der Teile auf dem Rohling (6) und die Steuerung der beiden Stationen (1,2) mittels Computer (11) erfolgt.

8. Bearbeitungsanlage zur Herstellung von Werkstücken aus einem Rohling (6), insbesondere einer Blechtafel, mit einer Stanz-und/oder Nibbelstation (1) und mit einer Station für thermisches Schneiden (2), insbesondere Laserstrahlschneiden, dadurch gekennzeichnet, dass die beiden Stationen (1,2) unabhängig voneinander betreibbar sind, derart, dass separate Rohlinge (6) gleichzeitig in beiden Stationen bearbeitet werden konnen, dass in der Stanz-und/oder Nibbelstation (1) während der Bearbeitung bezüglich der Werkzeuge bewegliche Haltemittel für den Rohling (6) und in der Schneidstation (2) ortsfeste Halte-oder Orientierungsmittel für den Rohling (6) und während der Bearbeitung bewegliche Schneidmittel, insbesondere ein Laser-Schneidkopf, vorgesehen sind, und das zwischen den Stationen Mittel (4,5) zur Ueberführung von Rohlingen vorgesehen sind.

9. Anlage nach Anspruch 8, dadurch gekennzeichnet, dass beide Stationen unabhängige Beschickungsmittel (3,5) aufweisen, und dass zwischen den beiden Stationen (1,2) mindestens ein Puffer (4,5) zur Aufnahme von Rohlingen (6) angeordnet ist, derart, dass beide Stationen (1,2) unabhängig voneinander beschickt werden und mit unabhängigen Taktzeiten arbeiten können.

10. Anlage nach Anspruch 8 oder 9, dadurch gekennzeichnet, dass die Stanz-und/oder Nibbelstation (1) Werkzeuge zur Erstellung von Orientierungselementen, z. B. Löchern (7) oder Anschlagflächen (8) am Rohling aufweist.

11. Anlage nach einem der Ansprüche 8 bis 10, dadurch gekennzeichnet, dass ein Computer (11) vorgesehen ist, dem Mittel (9) zum Erfassen geometrischer Daten der Werkstücke, Mittel (10) zum speichern dieser Daten, Mittel (13) zur Eingabe und zum Speichern von Daten betreffend Anzahl bestimmter herzustellender Werkstücke, Mittel (14) zum Optimieren von Werkstückserien und Mittel (15) zur Erstellung eines Schneidplans zugeordnet sind.

0 276 634

FIG.1

FIG.2

FIG.3

FIG. 4

FIG.5

0 276 634

FIG.6

Europäisches
Patentamt

EUROPÄISCHER RECHERCHENBERICHT

Nummer der Anmeldung

EP 87 81 0778

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | V.D.I.-ZEITSCHRIFT, Band 125, Nr. 12, Juni 1983, Seite 494, Düsseldorf, DE; "Laser-Schneid- und Stanzzentrum", und "Laserschneiden, Stanzen, Nibbeln und Umformen mit nur einer Maschine" * Spalten 1-3 * | 1,4,9 | B 23 K 26/00 |
| A | GB-A-2 056 897 (W. BREDOW) * Seite 2, Zeile 21 - Seite 3, Zeile 19; Figur 1 * | 1,7,8 | |
| A | LASER UND OPTOELEKTRONIK, Band 17, Nr. 3, September 1985, Seiten 282-290, Stuttgart, DE; E. BEYER et al.: "Schneiden mit Laserstrahlung" * Seite 290, Spalte 1; Figuren 13,14 * | 1,6 | |

RECHERCHIERTE SACHGEBIETE (Int. Cl.4)

B 23 K 26/00
B 21 D 28/00

Der vorliegende Recherchenbericht wurde für alle Patentansprüche erstellt

| Recherchenort | Abschlußdatum der Recherche | Prüfer |
|---|---|---|
| DEN HAAG | 13-04-1988 | DEMOLDER J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)